# EUROPÄISCHE PATENTSCHRIFT

(11) **EP 2 208 648 B1**
(45) Veröffentlichungstag und Bekanntmachung des Hinweises auf die Patenterteilung: **07.09.2011**
(21) Anmeldenummer: 09176430.8
(22) Anmeldetag: 19.11.2009
(51) Int. Cl.: B60R 25/00, B60R 25/10, E05B 65/20, G07C 9/00

(54) **Verfahren und System zur Überwachung des Innenraums einer Gütertransportvorrichtung**
Method and system for monitoring the interior of a goods transport device
Procédé et système de surveillance de l'espace intérieur d'un dispositif de transport de marchandises

(30) Priorität: 22.12.2008 DE 102008064034
(43) Veröffentlichungstag der Anmeldung: 21.07.2010
(73) Patentinhaber: Deutsche Post AG, 53113 Bonn (DE)
(72) Erfinder: Lau, Wolfgang, 09557 Flöha (DE); Schlindwein, Hermann, 76689 Karlsdorf-Neuthard (DE)
(74) Vertreter: Jostarndt, Hans-Dieter

(56) Entgegenhaltungen:
- WO-A1-2005/115811
- DE-A1-102006 012 336

## Beschreibung

Die Erfindung betrifft ein Verfahren zur Überwachung des Innenraums von Fahrzeugen, insbesondere zur Überwachung des Zugangsversuchs zu Fahrzeugen zum Transport von Gütern sowie ein entsprechendes System.

Verfahren und Vorrichtungen zur Überwachung von Fahrzeuginnenräumen sind hinlänglich bekannt. Im einfachsten Fall überwachen diese in Form von Alarmanlagen den Fahrzeuginnenraum und lösen bei unautorisiertem Zugriffsversuch, beispielsweise durch Aufbrechen einer Fahrzeugtür oder beim Einschlagen einer Scheibe einen Alarm aus. Diese Systeme verfügen üblicherweise über einen oder mehrere Sensoren, wie beispielsweise Türkontaktsensoren, Ultraschallüberwachung des Fahrzeuginnenraums oder aber auch über Fahrzeugneigungssensoren, die bei einem Diebstahlversuch durch Beladen des Fahrzeugs einen Alarm auslösen. Diese Systeme haben gemeinsam, dass sie zunächst manuell aktiviert werden müssen, beispielsweise durch das Abschließen des Fahrzeugs, um eine ungewollte Auslösung des Alarms zu vermeiden. Ohne manuelle Aktivierung bleiben diese Systeme passiv.

Solche bekannten Alarmsysteme sind in jüngerer Zeit mit einigen Komfortfunktionen ausgestattet worden, welche die Bedienung vereinfachen sollen. So beschreibt beispielsweise die DE 10 2005 031 186 A1 ein Alarmsystem für das schlüssellose Öffnen einer Fahrzeugtür (keyless entry), bei dem bei einem Zugangsversuch zu einem zunächst verschlossenen Fahrzeug eine Steuereinrichtung ein Aufforderungssignal an einen ID-Geber sendet und diesen dadurch auffordert, ein entsprechendes Bestätigungssignal zurückzusenden. Sofern ein entsprechendes Signal empfangen wird, Neue Beschreibungsseiten (Reinschrift)
wird die Tür entriegelt und kann geöffnet werden. Ansonsten bleibt die Tür verschlossen. Ein Alarm wird durch einen solchen Zugriffsversuch nicht ausgelöst.

Ein ähnliches System betrifft auch die DE 100 64 141 A1, in der ein Verfahren zum Nachweis einer Berechtigung zum Ver- und Entriegeln eines Kraftfahrzeugs beschrieben ist. Zur Öffnung eines versperrten Kraftfahrzeugs wird zwischen einem Code-Geber und einer Sende- und Empfangseinheit ein Frage-Antwort-Dialog durchgeführt und das Fahrzeug bei Feststellung einer Berechtigung entriegelt.

Die gattungsbildende DE 10 2006 012 336 A1 offenbart Einrichtungen und Verfahren zur Berührungsdetektion für ein Kraftfahrzeug mit einem Berührungssensor und einer fahrzeugeigenen Auswerteeinrichtung. Der Berührungssensor ist dabei beispielsweise als ein auf einem Kraftfahrzeugteil aufgebrachter und elektrisch mit der Auswerteeinrichtung kontaktierter piezoelektrischer Lack ausgebildet, wobei die Auswerteeinrichtung bei Berührung des piezoelektrischen Lacks mit einem Objekt mindestens ein Ausgangssignal erzeugt. Ebenso kann die Berührungsdetektion auch über eine Piezofolie oder über einen Körperschallsensor ausgeführt werden. Des Weiteren kann ein Objekt innerhalb eines Umgebungsbereichs des Fahrzeugs auch von einer kapazitiven Objekterfassungseinrichtung nachgewiesen werden. Des Weiteren wird ein Verfahren zur Überwachung eines Fahrzeuginnenraums offenbart, bei dem mittels eines Sensors die Fahrzeugumgebung überwacht wird. Bei Detektion eines Annäherungsversuchs werden weitere, dem Fahrzeug zugeordnete Alarmeinrichtungen wie eine Innenraum-Kamera, eine Alarmanlage oder eine Tonaufzeichnungseinrichtung in Betriebsbereitschaft versetzt, jedoch nicht vollständig aktiviert. Darüber hinaus ist vorgesehen, ein Keyless-Entry-System hiermit zu koppeln und nach Auslösen der oben genannten Betriebsbereitschaft zu überprüfen, ob sich ein ID-Geber in der Nähe befindet. Ist dies der Fall, wird das System wieder in den Ruhemodus versetzt. Im anderen Fall werden weitere Stufen des Alarmsystems ausgelöst.

Bei derartigen Systemen kann es als nachteilig empfunden werden, dass diese Systeme zunächst manuell aktiviert werden müssen, beispielsweise in dem das Fahrzeug mit einem entsprechenden elektronischen Schlüssel verriegelt wird. Das System bietet außerdem kaum Schutz gegen einen Diebstahl aus dem Fahrzeug. Zwar würden diese Systeme einen Alarm auslösen, doch ein Gegenstand der sich im Fahrzeuginneren befindet kann von einem Dieb schnell gestohlen werden, wobei in der Regel keine verwertbaren Beweise über den Tathergang bleiben, die zu einer Ermittlung des Täters führen könnten. Daher eignen sich diese Systeme bislang nicht für die Überwachung von Containern, Eisenbahnwagons oder LKW-Laderäumen.

Die Aufgabe der vorliegenden Erfindung besteht darin, die oben dargestellten Nachteile zu überwinden und ein Verfahren zur Überwachung des Innenraums einer Gütertransportvorrichtung zu schaffen, das einerseits einfach in der Bedienung ist und darüber hinaus einen besseren Schutz gegenüber Diebstählen ermöglicht, insbesondere gegenüber so genannten Blitzdiebstählen, bei denen die Täter in kürzester Zeit, in der die Gütertransportvorrichtung unbeaufsichtigt ist versuchen, Gegenstände aus einem Laderaum zu entwenden.

Diese Aufgabe wird gelöst durch ein Verfahren zur Überwachung des Innenraums einer Gütertransportvorrichtung, bei dem ein Zugangsversuch zum Innenraum durch wenigstens einen Sensor erkannt wird, woraufhin eine mit dem Sensor verbundene Steuereinrichtung wenigstens ein Alarmsignal erzeugt und mittels einer Sendeeinheit ein Aufforderungssignal an einen externen ID-Geber sendet, um den ID-Geber zur Sendung eines Erkennungssignals aufzufordern, welches über eine Empfangseinrichtung empfangen und in einer Erkennungseinrichtung überprüft wird, wobei nach erfolgreicher Überprüfung das Alarmsignal deaktiviert wird. Hierzu überprüft die Sende-/Empfangseinheit zweckmäßigerweise fortwährend, ob sich ein autorisierter ID-Geber in der Nähe befindet.

Ein weiterer Gegenstand der vorliegenden Erfindung ist ein System zur Überwachung des Innenraums einer Gütertransportvorrichtung, umfassend eine Steuereinrichtung, wenigstens einen Sensor, eine Sendeeinheit, einen ID-Geber, eine Empfangseinrichtung sowie eine Erkennungseinrichtung zur Durchführung des erfindungsgemäßen Verfahrens.

Die vorliegende Erfindung betrifft schließlich auch die Verwendung des erfindungsgemäßen Systems zur Überwachung des Innenraums einer Gütertransportvorrichtung.

Der vorliegenden Erfindung liegt dabei die Erkenntnis zugrunde, dass es sich als vorteilhaft erweist, wenn zunächst jeder Zugangsversuch, der mittels eines Sensors festgestellt wird, einen Alarmsignal auslöst - was im ersten Schritt kein hörbarer oder sichtbarer Alarm sein muss. Parallel hierzu wird überprüft, ob sich eine zugangsberechtigte Person mit einem entsprechenden externen ID-Geber innerhalb der Reichweite der Sendeeinheit befindet, die üblicherweise einige Meter beträgt, bzw. auf eine gewünschte Entfernung einstellbar ist. Ist dies der Fall, wird der Alarm deaktiviert.

Erfolgt keine Deaktivierung des Alarmsignals, sei es, weil überhaupt kein Erkennungssignal empfangen wird oder weil zwar ein Erkennungssignal empfangen wird, dieses jedoch keinem autorisierten Benutzer zugeordnet werden kann, kann das Verfahren weitere Schritte vorsehen, wie beispielsweise das Starten einer Kameraaufzeichnung des Innenraums der Gütertransportvorrichtung, Auslösung eines akustischen Alarms etc.. Die Bezeichnung "extern" für den ID-Geber soll hierbei lediglich klarstellen, dass der ID-Geber nicht mit der Steuereinrichtung verkabelt ist, sondern ein separates Gerät darstellt.

Unter einer Gütertransportvorrichtung wird im Sinne der vorliegenden Erfindung eine Vorrichtung verstanden, mit der Güter transportiert werden können, wobei es sich in der Regel um geschlossene Vorrichtungen handelt, die eine oder mehrere Zugangsöffnungen aufweisen. Als bevorzugte Gütertransportvorrichtung seien ein Lastkraftwagen, ein Eisenbahngüterwagon oder ein Container genannt. Der Innenraum bezeichnet dabei einerseits den Laderaum, sowie ggf. auch ein Führerhaus, beispielsweise bei einem Lastkraftwagen.

Als erfindungsgemäß einsetzbare Sensoren kommen prinzipiell sämtliche Sensoren in Betracht, die sich für die Innenraumüberwachung eignen. Diese können einzeln, zu mehreren oder aber auch als Kombination unterschiedlicher Sensoren eingesetzt werden. Diese Sensoren können den Innenraum der Gütertransportvorrichtung selbst, bzw. Veränderungen in diesem Innenraum detektieren und/ oder die Außenhülle des Innenraums überwachen. Beispielhaft seien als geeignete Sensoren Bewegungssensoren, Erschütterungssensoren, Türkontaktsensoren und Temperatursensoren genannt. Türkontaktsensoren sind besonders geeignet, da sie preiswert sind und insbesondere bei einem Innenraum mit festen Außenwänden eine.sehr gute Überwachungsmöglichkeit darstellen. Sie sind insbesondere geeignet, um ein System zu realisieren, das mit verhältnismäßig günstigen Sensoren den Innenraum einer Gütertransportvorrichtung vor so genannten Blitzdiebstählen zu schützen kann, also vor schnell ausgeführten Diebstählen, die ansonsten in der Regel unbemerkt erfolgen.

Unter einer Steuereinrichtung wird im Sinne der vorliegenden Erfindung ein Gerät verstanden, das über einen intelligenten programmierbaren Controller und mehrere an diesen angeschlossene Signaleingänge sowie über einen oder mehrere Signalausgänge verfügt. Mit Hilfe des Controllers können die empfangenen Signale in entsprechende Steuerbefehle umgewandelt werden. So wird ein von einem Sensor empfangenes Signal, beispielsweise über das Öffnen einer Türe zum Innenraum, über einen Signaleingang aufgenommen, durch den Controller in ein Alarmsignal umgewandelt, welches dann über den Signalausgang an ein weiteres Gerät geleitet wird. Die Steuereinrichtung kann im Innenraum der Gütertransportvorrichtung angebracht werden, beispielsweise in der Fahrerkabine oder auch im Laderaum eines Lastkraftwagens.

Eine Sendeeinheit im Sinne der vorliegenden Erfindung ist ein Gerät, mit dem ein gegebenenfalls kodiertes Funksignal mittels einer oder mehrerer Antennen gesendet werden kann. Dieses Funksignal enthält als Aufforderungssignal kodierte Informationen, die einen externen ID-Geber zur Sendung eines Erkennungssignals auffordern.

Unter einem ID-Geber wird ein Gerät verstanden, welches über einen Funkempfänger verfügt, mit dem ein Aufforderungssignal empfangen werden kann, beispielsweise ein Transponder. Der ID-Geber ist dabei so ausgestaltet, dass mittels einer integrierten Halbleiterlogik das Aufforderungssignal analysiert und erkannt werden kann. Der ID-Geber umfasst außerdem einen Sender, mit dem der ID-Geber ein gegebenenfalls kodiertes Erkennungssignal absenden kann, wenn ein empfangenes Signal als Aufforderungssignal detektiert wurde. Der ID-Geber verfügt über eine Energieversorgung, beispielsweise in Form einer Batterie oder eines Akkumulators. Ein ID-Geber ist zweckmäßigerweise kleinformatig gehalten, also beispielsweise im Scheckkartenformat. Der ID-Geber kann mittels einer einfachen Installationsroutine auf ein bestimmtes Aufforderungssignal und Erkennungssignal eingestellt und auf diese Weise mit der Sendeeinheit, sowie der Empfangs- und Erkennungseinrichtung abgeglichen werden.

Eine erfindungsgemäß verwendete Empfangseinrichtung setzt sich beispielsweise aus einer oder mehreren Antennen und gegebenenfalls einem Signalverstärker zusammen. Die Empfangseinrichtung leitet das von dem ID-Geber empfangene Erkennungssignal gegebenenfalls verstärkt an eine mit der Empfangseinrichtung verbundene Erkennungseinrichtung weiter.

Die Erkennungseinrichtung umfasst einen intelligenten Controller, der in der Lage ist, das gegebenenfalls kodierte Erkennungssignal des ID-Gebers zu analysieren und daraufhin zu untersuchen, ob dieses Signal ein autorisiertes Erkennungssignal ist.

Unter einer erfolgreichen Überprüfung des Erkennungssignals des externen ID-Gebers wird verstanden, dass die Erkennungseinrichtung das über die Empfangseinrichtung empfangene Signal einem zugriffs- und zugangsberechtigten Benutzer oder Benutzerkreis zuordnen kann.

Bei dem erfindungsgemäßen System können zumindest die Sendeeinheit, die Empfangseinrichtung sowie die Erkennungseinrichtung in die Steuereinrichtung integriert werden.

Der Vorteil des erfindungsgemäßen Verfahrens besteht unter anderem darin, dass eine manuelle Aktivierung der Überwachung, wie bisher üblich mit dem Verschließen des Fahrzeugs, nicht erforderlich ist. Ein umständliches Hantieren mit einer Fernbedienung und die Kontrolle, ob die Überwachung auch tatsächlich aktiviert wurde, entfällt damit ebenso. Dies ist insbesondere deshalb vorteilhaft, da das Bedienpersonal einer Gütertransportvorrichtung beim Ausliefern von Gütern häufig keine Hand zur Bedienung einer Fernbedienung frei hat, wenn die auszuliefernden Gegenstände getragen werden müssen, wie dies bei Paketen oder ähnlich großen Gegenständen der Fall sein kann. Bei der vorliegenden Erfindung genügt es, den ID-Geber beispielsweise in der Hosentasche zu tragen. Das erfindungsgemäße Verfahren überprüft einen Zugangsversuch zu jeder Zeit, unabhängig vom Schließzustand des Fahrzeugs bzw. der Gütertransportvorrichtung. Deshalb löst ein normales Öffnen einer unverriegelten Ladetür eines LKW-Laderaums bereits ein Alarmsignal aus.

Aus diesem Grunde besteht die Ausführungsform des erfindungsgemäßen Verfahrens und des Systems darin, dass sich der Innenraum der Gütertransportvorrichtung im nicht abgeschlossenen Zustand befindet. Hierunter wird ein Schließzustand verstanden, bei dem eine Tür oder Luke des Innenraums ohne Zuhilfenahme eines Schlüssels geöffnet werden kann, beispielsweise allein durch Betätigen eines Hebels oder einer Klinke. Die Überwachung ist bei dieser Ausführungsform grundsätzlich zu jeder Zeit aktiv, beispielsweise auch dann, wenn der Fahrer eines mit Paketen beladenen Lastkraftwagens zum Zwecke einer Einzellieferung den Lastkraftwagen verlässt und das Paket zu dessen Empfänger bringt. Hierbei wird häufig aus Bequemlichkeit das Fahrzeug nicht verschlossen, weshalb es in diesem Moment leicht zu Diebstählen kommen kann. Das erfindungsgemäße Verfahren bzw. System bietet auch in einem solchen Fall Schutz.

Vorzugsweise kann das Verfahren in Kombination mit der oben beschriebenen erfindungsgemäßen Ausführungsform des nicht abgeschlossenen Innenraums vorsehen, dass das System erst bei einem Fahrzeugstillstand aktiviert wird. Der Fahrzeugstillstand kann hierzu beispielsweise über einen GPS-Empfänger oder Beschleunigungssensoren festgestellt werden. Auf diese Weise kann ein unerwünschtes Auslösen eines Alarms während der Fahrt durch Bewegungsmelder im Laderaum aufgrund wackelnder oder sich leicht bewegender Ladung vermieden werden.

Eine bevorzugte Ausführungsform des erfindungsgemäßen Verfahrens und des Systems besteht darin, dass die Erzeugung des Alarmsignals die Aktivierung wenigstens einer im Innenraum der Gütertransportvorrichtung befindlichen Kamera umfasst. Die Aktivierung der Kamera kann beispielsweise direkt durch die Steuereinrichtung vorgenommen werden. Dies ist besonders vorteilhaft, da auf diese Weise ein potentiell als Einbruchs- oder Diebstahlsversuch einzustufender Zutritt zum Innenraum mittels einer Videokamera aufgezeichnet und beispielsweise auf einer Festplatte gespeichert werden kann. Die Videoaufzeichnung kann in einem separaten Aufzeichnungsgerät erfolgen oder auch in die Steuereinrichtung integriert werden. Die Kamera ist dabei so angeordnet, dass sie zumindest alle Türen oder Luken, über die der Innenraum der Gütertransportvorrichtung betreten werden kann, optisch erfasst. Gegebenenfalls ist hierfür auch der Einsatz mehrerer Kameras sinnvoll, insbesondere, wenn die freie Sicht durch hohe Ladung im Innenraum teilweise versperrt wird.

Beim Einsatz mehrerer Kameras werden diese vorzugsweise untereinander vernetzt, bzw. die Videosignale der Kameras werden an einer Stelle zentral gesammelt und gegebenenfalls gespeichert, beispielsweise in der Steuereinrichtung. Die Übertragung der Videodaten kann grundsätzlich über Kabel oder Lichtleiter oder aber auch kabellos über Funk erfolgen. Die Funkübertragung der Daten hat den Vorteil, dass auf diese Weise die variable Anbringung der Kameras ermöglicht wird. Dies kann aufgrund andersartiger Beladung bei einzelnen Fahrten sinnvoll sein, um auf diese Weise eine vollständige Überwachung des Innenraums in jedem Fall sicher zu stellen. Aufgrund der Funkübertragung müssen dann nicht jedes Mal die Datenkabel der einzelnen Kameras neu verlegt werden.

Bevorzugt werden bei dem erfindungsgemäßen Verfahren und dem System Kameras mit hoher Lichtempfindlichkeit eingesetzt, die auch bei schlechten Lichtverhältnissen gute Aufnahmen liefern. Ebenso können auch Kameras eingesetzt werden, deren Bilderfassungseinheit auch im IR-Bereich empfindlich ist. In diesem Falle kann zusätzlich noch eine Infrarotbeleuchtung eingesetzt werden, um die Aufnahmequalität weiter zu verbessern.

Nach einer weiteren bevorzugten Ausführungsform des erfindungsgemäßen Verfahrens und des Systems werden die Bilddaten der Kamera gespeichert. Dies kann lokal erfolgen oder aber auch zentral, indem die Bilddaten mittels einer Sendeeinrichtung per Funk an einen Empfänger übertragen werden, der sich außerhalb des Innenraums befindet, beispielsweise an eine Alarmempfangsstelle. Bei dieser Übertragung können nicht nur Bilddaten übertragen werden, sonders es können beispielsweise auch zusätzliche Informationen übertragen werden, wie die Kennung der Gütertransportvorrichtung, mit der diese identifizierbar ist. Die Alarmempfangsstelle kann dann entsprechende Maßnahmen einleiten wie beispielsweise einen Notruf an eine Polizeistelle absetzen.

Es ist ebenso möglich, die Bilddaten lokal zwischenzuspeichern und zusätzlich per Funk an die Alarmempfangsstelle zu übertragen. Die Zwischenspeicherung und Versendung der Bilddaten kann durch einen Videoserver realisiert werden, in dem eine Sendeeinrichtung integriert ist. In einen solchen Videoserver können außerdem auch die übrigen Funktionen der Steuereinrichtung integriert werden. Der Videoserver ist in bevorzugter Weise erschütterungsfest ausgelegt.

Es ist jedoch ebenso möglich, dass die Bilddaten grundsätzlich lokal gespeichert werden und lediglich dann zusätzlich an eine Alarmempfangsstelle übertragen werden, wenn der Alarm nicht innerhalb einer vorgegebenen Zeitspanne deaktiviert wird. Diese Zeitspanne kann beispielsweise 5 oder 10 Sekunden betragen, ist jedoch individuell einstellbar.

Die Sendeeinrichtung nimmt die Übertragung der Bilddaten in bevorzugter Weise über ein GPRS oder ein UMTS-Modem vor.

Eine Weiterbildung des erfindungsgemäßen Verfahrens und des Systems sieht vor, dass die Erzeugung des Alarmsignals die Aktivierung eines akustischen und/ oder optischen Signals umfasst. Auf diese Weise werden bei Auslösen eines Alarms nicht nur Bilddaten übertragen, sondern zusätzlich noch ein für den Einbrecher oder den Dieb erkennbarer Alarm ausgelöst, wie eine Sirene oder ein Blinklicht, mit dem der Einbrecher oder Dieb in die Flucht geschlagen werden kann.

Es ist ferner bevorzugt, dass die Aktivierung der Kamera, des akustischen und/ oder optischen Signals und/ oder die Übertragung der Bilddaten der Kamera über eine Sendeeinrichtung per Funk an einen Empfänger außerhalb des Innenraums mit einer zeitlichen Verzögerung erfolgt. Eine zeitliche Verzögerung kann beispielsweise 5 Sekunden betragen und an der Sendeeinrichtung eingestellt werden. In dieser Zeit bleibt vor dem Auslösen des Alarms noch genügend Zeit für eine autorisierte Person, sich mit seinem ID-Geber in den Sende-/ Empfangsbereich der Sendeeinheit zu begeben um den Alarm zu deaktivieren.

Besonders vorteilhaft ist es, wenn für die verschiedenen Umsetzungen des Alarmsignals unterschiedliche zeitliche Verzögerungen vorgesehen werden, insbesondere, wenn die zeitliche Verzögerung für die Aktivierung der Kamera und/oder die Übertragung der Bilddaten der Kamera über eine Sendeeinrichtung per Funk an einen Empfänger außerhalb des Innenraums kürzer ist als für die Aktivierung des akustischen und/oder optischen Signals. Auf diese Weise kann zunächst einmal grundsätzlich jeder Zugangsversuch lokal aufgezeichnet werden, und falls dann nach einer gewissen Zeitspanne von beispielsweise 5 Sekunden keine Deaktivierung des Alarms über einen in der Nähe befindlichen ID-Geber erfolgt, werden zusätzlich als weitere Stufe das akustische und/oder optische Signal ausgelöst und außerdem die Bilddaten der Kamera mittels der Sendeeinrichtung per Funk an einen Empfänger übertragen, der sich außerhalb des Innenraums befindet, beispielsweise an eine Alarmempfangsstelle. Die Regelung einer solchen zeitlichen Abfolge kann beispielsweise von der Steuereinrichtung vorgenommen werden.

In einer besonders vorteilhaften Ausgestaltung des erfindungsgemäßen Verfahrens und des Systems wird die Sendeleistung der Sendeeinheit so eingestellt, dass der externe ID-Geber das Aufforderungssignal nur in einem Abstand von bis zu 10 m außerhalb des Innenraums einer Gütertransportvorrichtung empfangen kann, bevorzugt von bis zu 5 m, ganz besonders bevorzugt bis zu 2 m. Der externe ID-Geber hat für das hierdurch angeforderte Erkennungssignal eine Reichweite, die zumindest den jeweiligen oben genannten Entfernungen entsprechend ausgelegt ist. Diese Ausführungsform ist besonders vorteilhaft, da auf diese Weise das Alarmsignal nur dann deaktiviert wird, wenn sich eine berechtigte Person, also eine Person, die einen passenden ID-Geber bei sich trägt, in unmittelbarer Nähe der Gütertransportvorrichtung befindet.

Eine möglichst exakte Einhaltung der oben genannten Entfernungen kann bevorzugt durch den Einsatz mehrerer Sende- und Empfangsantennen für die Sendeeinheit realisiert werden. Diese können beispielsweise in der Nähe der äußeren Begrenzungen des Innenraums einer Gütertransportvorrichtung positioniert werden, beispielsweise in den vier Ecken eines rechteckigen Innenraums. Bei langen Innenräumen können zwei weitere Antennen jeweils auf etwa der Hälfte der Länge angebracht werden. Die Antennen können sich im Inneren des Innenraums befinden und sind hierdurch vor möglichen Manipulationsversuchen oder der Witterung geschützt.

Eine Weiterbildung des erfindungsgemäßen Verfahrens und des Systems zeichnet sich dadurch aus, dass die Deaktivierung des Alarmsignals durch die Steuereinrichtung erfolgt.

Nach einer besonders bevorzugten Ausführungsform des erfindungsgemäßen Verfahrens und des Systems ist der ID-Geber ein aktiver RFID-Transponder. Dies ist besonders vorteilhaft, da ein aktiver RFID-Transponder einerseits eine ausreichende Sendereichweite zur Rücksendung des von der Sendeeinheit angeforderten Erkennungssignals und außerdem eine ausreichende Sicherheit durch Verschlüsselungsmöglichkeiten der Funksignale bietet.

Nach einer Weiterbildung des erfindungsgemäßen Verfahrens und des Systems umfasst die Steuereinrichtung einen GPS-Empfänger oder ist mit einem solchen Empfänger verbunden. Dies ist besonders vorteilhaft, da es auf diese Weise möglich ist, bei Auslösen eines Alarmsignals die Standortdaten der Gütertransportvorrichtung zu speichern und diese Informationen auch per Funk beispielsweise an eine Alarmempfangsstelle weiter zu leiten, ganz besonders bevorzugt in Kombination mit durch im Innenraum befindliche Kameras aufgenommene Bilddaten, sowie gegebenenfalls weiteren Informationen.

Eine weitere, besonders bevorzugte Ausführungsform des erfindungsgemäßen Verfahrens und des Systems sieht vor, dass die Steuereinrichtung, der Sensor, die Sendeeinheit, die Kamera, die Sendeeinrichtung, die Empfangseinrichtung, die Erkennungseinrichtung bzw. der GPS-Empfänger an eine eigene Energieversorgung angeschlossen werden. Je nachdem, welche Bauteile das erfindungsgemäße System aufweist, werden einzelne, bevorzugt jedoch alle Bauteile, die für ihren Betrieb mit elektrischer Energie versorgt werden müssen, an diese separate Energieversorgung angeschlossen. Unter einer eigenen Energieversorgung wird im Sinne dieser Ausführungsform ein Energiespeicher verstanden, der unabhängig von der üblichen elektrischen Versorgung der Gütertransportvorrichtung auch bei Ausfall der elektrischen Versorgung der Gütertransportvorrichtung weiterhin elektrische Energie liefem kann, wenigstens für eine bestimmte Zeit. Dies kann beispielsweise durch eine Batterie, bzw. einen Akkumulator realisiert werden. Dieser kann zum Zweck der Aufrechterhaltung des Ladezustandes an die Bordspannung der Gütertransportvorrichtung angeschlossen sein, sofern diese über eine eigene Spannungsversorgung verfügt.

Diese eigene Energieversorgung sollte zweckmäßigerweise in der Nähe der Steuereinrichtung positioniert werden, also beispielsweise im Innenraum der Gütertransportvorrichtung, insbesondere im Führerhaus eines Lastkraftwagens oder in dessen Laderaum. Sie kann aber ebenso direkt in die Steuereinrichtung in-tegriert werden. Der Einsatz einer eigenen Energieversorgung ist besonders vorteilhaft, da das System nicht ohne weiteres durch Kappung der Energiezufuhr außer Betrieb gesetzt werden kann.

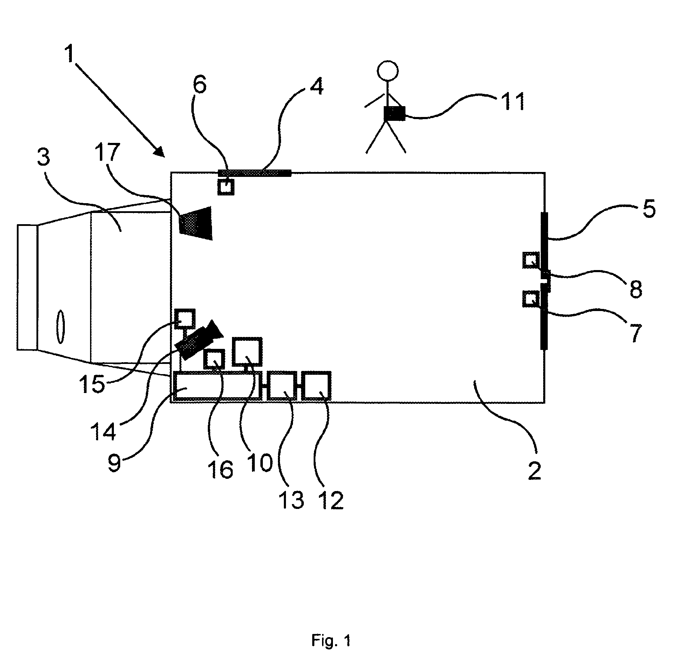

Der schematische Aufbau und die Funktionsweise der Erfindung werden nun im Folgenden anhand einer in der Fig. 1 dargestellten Ausführungsform näher erörtert.

Im Einzelnen ist in der Fig. 1 eine Gütertransportvorrichtung 1 in Form eines Lastkraftwagens in der Aufsicht dargestellt. Der Lastkraftwagen weist einen zu überwachenden Innenraum 2 sowie eine Fahrerkabine 3 auf, wobei der Innenraum 2 vorliegend als von der Fahrerkabine 3 separierter Frachtraum ausgeführt ist. Der Innenraum 2 ist durch eine Frachttüre 4 und eine zweiflüglig ausgebildete Frachttüre 5 von außen zugänglich. Die Frachttüren 4 und 5 sind jeweils mit Sensoren 6, 7 und 8 ausgerüstet, die als Türkontaktsensoren ausgestaltet sind und die Öffnung der Frachttüren 4 und 5 überwachen.

Die Sensoren 6, 7 und 8 sind über in Fig. 1 nicht dargestellte Kabel mit einer Steuereinrichtung 9 verbunden, über die sie mit elektrischer Energie versorgt werden und über die das Auslösen einer der Sensoren 6, 7 und 8 (z. B. durch Öffnen einer oder beider Frachttüren 4 und 5) an die Steuereinrichtung 9 gesendet wird. Die Steuereinrichtung 9 erzeugt in diesem Fall ein Alarmsignal und ferner mittels einer Sendeeinheit 10 ein Aufforderungssignal, welches von einem externen ID-Geber 11, der vorliegend als aktiver RFID-Transponder ausgeführt ist, empfangen wird, sofern sich dieser innerhalb der vorgegebenen maximalen Reichweite der Sendeeinheit 10 befindet, die beispielsweise durch Begrenzung der Sendeleistung der Sendeeinheit 10 auf maximal 5 Meter Entfernung vom Lastkraftwagen limitiert ist.

Der externe ID-Geber 11 sendet aufgrund des empfangenen Aufforderungssignals ein verschlüsseltes Erkennungssignal, welches von einer Empfangseinrichtung 12 empfangen und in einer Erkennungseinrichtung 13 dahingehend überprüft wird, ob das vom externen ID-Geber 11 empfangene Signal ein autorisiertes Signal ist, mit welchem der Zutritt zum Innenraum 2 zugelassen ist. Wird ein solches Signal empfangen und als autorisiert erkannt, veranlasst die Erkennungseinrichtung 13 die Steuereinrichtung 9 dazu, das Alarmsignal zu deaktivieren.

Für den Fall, dass das vom externen ID-Geber 11 empfangene Signal kein autorisiertes Signal darstellt, oder die Empfangseinrichtung 12 auf das Aufforderungssignal der Sendeeinheit 10 überhaupt kein Erkennungssignal empfängt, wird eine im Innenraum 2 angebrachte Kamera 14, im vorliegenden Falle eine Videokamera, über die Steuereinrichtung 9 aktiviert. Die Kamera 14 sendet die aufgenommenen Bilddaten vom Innenraum 2 an eine Sendeeinrichtung 15 in der diese Bilddaten lokal gespeichert werden.

Die Sendeeinrichtung 15 schickt die Bilddaten ferner mittels eines integrierten UMTS-Modems an eine Alarmempfangsstelle, die auf diese Weise sowohl von der Tatsache informiert wird, dass ein unautorisierter Zugriffsversuch stattfindet als auch gleichzeitig mit entsprechendem Bildmaterial versorgt wird. Damit kann die Alarmempfangsstelle erkennen, ob es sich womöglich doch um einen berechtigten Zugriffsversuch handelt, weil sie beispielsweise das Bedienpersonal in der Videoaufnahme identifizieren kann. Dieser Fall könnte beispielsweise dann eintreten, wenn das Bedienpersonal den RFID-Transponder nicht bei sich trägt.

Zweckmäßigerweise enthalten die an die Alarmempfangsstelle gesendeten Bildinformationen noch zusätzliche Informationen wie beispielsweise eine Kennung des Lastkraftwagens, mit dem dieser identifizierbar ist und gegebenenfalls noch aktuelle Standortinformationen, die mittels eines an das System angeschlossenen GPS-Empfängers 16 ermittelt werden.

In der in Fig. 1 schematisch dargestellten Ausführungsform stellen die Steuereinrichtung 9, die Sendeeinheit 10, die Empfangseinrichtung 12, die Erkennungseinrichtung 13 und die Sendeeinrichtung 15 Baugruppen eines Videoservers dar.

Während dieser Vorgänge überwacht die Steuereinheit 9 fortwährend, ob sich nicht mittlerweile ein autorisierter RFID-Geber 11 in Reichweite der Sendeeinheit 10 befindet. Ist dies nach Verstreichen von 5 Sekunden vom Auslösezeitpunkt des Alarmsignals nicht erfolgt, so löst die Steuereinheit 9 zusätzlich noch einen akustischen Alarm über eine Sirene 17 aus.

### Bezugszeichenliste:

- 1: Gütertransportvorrichtung
- 2: Innenraum
- 3: Fahrerkabine
- 4: Frachttür
- 5: zweiflüglige Frachttür
- 6: Sensor
- 7: Sensor
- 8: Sensor
- 9: Steuereinrichtung
- 10: Sendeeinheit
- 11: externer ID-Geber
- 12: Empfangseinrichtung
- 13: Erkennungseinrichtung
- 14: Kamera
- 15: Sendeeinrichtung
- 16: GPS-Empfänger
- 17: Sirene

## Patentansprüche

1. Verfahren zur Überwachung des Innenraums einer Gütertransportvorrichtung (1), bei dem ein Zugangsversuch zum Innenraum (2) durch wenigstens einen Sensor (6, 7, 8) erkannt wird, woraufhin eine mit dem Sensor (6, 7, 8) verbundene Steuereinrichtung (9) wenigstens ein Alarmsignal erzeugt und mittels einer Sendeeinheit (10) ein Aufforderungssignal an einen externen ID-Geber (11) sendet, um den ID-Geber (11) zur Sendung eines Erkennungssignals aufzufordern, welches über eine Empfangseinrichtung (12) empfangen und in einer Erkennungseinrichtung (13) überprüft wird, wobei nach erfolgreicher Überprüfung das Alarmsignal deaktiviert wird,
**dadurch gekennzeichnet,**
**dass** sich der Innenraum (2) der Gütertransportvorrichtung (1) im nicht abgeschlossenen Zustand befindet.

2. Verfahren nach Anspruch 1,
**dadurch gekennzeichnet,**
**dass** die Erzeugung des Alarmsignals die Aktivierung wenigstens einer im Innenraum befindlichen Kamera (14) umfasst.

3. Verfahren nach Anspruch 2,
**dadurch gekennzeichnet,**
**dass** die Bilddaten der Kamera (14) gespeichert werden.

4. Verfahren nach Anspruch 2 oder 3,
**dadurch gekennzeichnet,**
**dass** die Bilddaten der Kamera (14) über eine Sendeeinrichtung (15) per Funk an einen Empfänger übertragen werden, der sich außerhalb des Innenraums (2) befindet, insbesondere an eine Alarmempfangsstelle.

5. Verfahren nach einem der vorstehenden Ansprüche,
**dadurch gekennzeichnet,**
**dass** die Erzeugung des Alarmsignals die Aktivierung eines akustischen und/ oder optischen Signals umfasst.

6. Verfahren nach einem der Ansprüche 2 bis 5,
**dadurch gekennzeichnet,**
**dass** die Aktivierung der Kamera (14), des akustischen und/ oder optischen Signals und/ oder die Übertragung der Bilddaten der Kamera (14) über eine Sendeeinrichtung (15) per Funk an einen Empfänger außerhalb des Innenraums (2) mit einer zeitlichen Verzögerung erfolgt.

7. Verfahren nach einem der vorstehenden Ansprüche,
**dadurch gekennzeichnet,**
**dass** die Sendeleistung der Sendeeinheit (10) so eingestellt wird, dass der externe ID-Geber das Aufforderungssignal in einem Abstand von bis zu 10 m außerhalb des Innenraums (2) der Gütertransportvorrichtung (1) empfangen kann.

8. Verfahren nach einem der vorstehenden Ansprüche,
**dadurch gekennzeichnet,**
**dass** die Deaktivierung des Alarmsignals durch die Steuereinrichtung (9) erfolgt.

9. Verfahren nach einem der vorstehenden Ansprüche,
**dadurch gekennzeichnet,**
**dass** die Gütertransportvorrichtung (1) ein Lastkraftwagen, ein Eisenbahngüterwagon oder ein Container ist.

10. Verfahren nach einem der vorstehenden Ansprüche,
**dadurch gekennzeichnet,**
**dass** als Sensor (6, 7, 8) einer oder mehrere Bewegungssensoren, Erschütterungssensoren, Türkontaktsensoren und Temperatursensoren eingesetzt werden.

11. Verfahren nach einem der vorstehenden Ansprüche,
**dadurch gekennzeichnet,**
**dass** der ID-Geber (11) ein aktiver RFID-Transponder ist.

12. Verfahren nach einem der vorstehenden Ansprüche,
**dadurch gekennzeichnet,**
**dass** die Steuereinrichtung (9) einen GPS-Empfänger (16) umfasst.

13. Verfahren nach einem der vorstehenden Ansprüche,
**dadurch gekennzeichnet,**
**dass** die Steuereinrichtung (9), der Sensor (6, 7, 8), die Sendeeinheit (10), die Empfangseinrichtung (12), die Erkennungseinrichtung (13), die Kamera (14), die Sendeeinrichtung (15), bzw. der GPS-Empfänger (16) an eine eigene Energieversorgung angeschlossen werden.

14. System zur Überwachung des Innenraums (2) einer nicht abgeschlossenen Gütertransportvorrichtung (1) umfassend eine Steuereinrichtung (9), wenigstens einen Sensor (6, 7, 8), eine Sendeeinheit (10), einen ID-Geber (11), eine Empfangseinrichtung (12) sowie eine Erkennungseinrichtung (13) zur Durchführung eines Verfahrens nach einem der Ansprüche 1 bis 13.

15. System nach Anspruch 14,
**dadurch gekennzeichnet,**
**dass** das System wenigstens eine Kamera (14) umfasst, die sich im Innenraum (2) der Gütertransportvorrichtung (1) befindet.

16. System nach Anspruch 15,
**dadurch gekennzeichnet,**
**dass** die Kamera (14) mit einer Sendeeinrichtung (15) verbunden ist, insbesondere mit einer Sendeeinrichtung (15), die ein GPRS oder ein UMTS-Modem umfasst.

17. System nach einem der Ansprüche 14 bis 16,
**dadurch gekennzeichnet,**
**dass** die Steuereinrichtung (9), der Sensor (6, 7, 8), die Sendeeinheit (10), die Empfangseinrichtung (12), die Erkennungseinrichtung (13), die Kamera (14), die Sendeeinrichtung (15), bzw. der GPS-Empfänger (16) an eine eigene Energieversorgung angeschlossen sind.

18. Verwendung eines Systems gemäß einem der Ansprüche 14 bis 17 zur Überwachung des Innenraums (2) einer Gütertransportvorrichtung (1).

## Claims

1. A method for monitoring the interior of a goods transport device (1), in which an attempt to access the interior (2) is detected by at least one sensor (6, 7, 8), after which a control device (9) connected to the sensor (6, 7, 8) generates at least one alarm signal and, via a transmitter unit (10), sends a request signal to an external ID transducer (11) in order to request the ID transducer (11) to send a recognition signal that is received via a receiver device (12) and checked in a recognition device (13), whereby the alarm signal is deactivated once it has been checked successfully,
**characterized in that**
the interior (2) of the goods transport device (1) is not in the locked state.

2. The method according to Claim 1,
**characterized in that**
the generation of the alarm signal comprises the activation of at least one camera (14) that is located in the interior.

3. The method according to Claim 2,
**characterized in that**
the image data of the camera (14) is stored.

4. The method according to Claim 2 or 3,
**characterized in that**
the image data of the camera (14) is transmitted via a transmitter device (15) by radio to a receiver that is located outside of the interior (2), especially in an alarm receiving station.

5. The method according to one of the preceding claims,
**characterized in that**
the generation of the alarm signal comprises the activation of an acoustic and/or visual signal.

6. The method according to one of Claims 2 to 5,
**characterized in that**
the camera (4), the acoustic and/or visual signal are activated, and/or the image data from the camera (14) is transmitted via a transmitter device (15) by radio to a receiver that is located outside of the interior (2) with a time delay.

7. The method according to one of the preceding claims,
**characterized in that**
the transmission power of the transmitter unit (10) is selected in such a way that the external ID transducer can receive the request signal at a distance of up to 10 meters outside of the interior (2) of the goods transport device (1).

8. The method according to one of the preceding claims,
**characterized in that**
the alarm signal is deactivated by the control device (9).

9. The method according to one of the preceding claims,
**characterized in that**
the goods transport device (1) is a truck, a railroad freight car or a container.

10. The method according to one of the preceding claims,
**characterized in that**
one or more motion sensors, vibration sensors, door contact sensors and temperature sensors are used as the sensor (6, 7, 8).

11. The method according to one of the preceding claims,
**characterized in that**
the ID transducer (11) is an active RFID transponder.

12. The method according to one of the preceding claims,
**characterized in that**
the control device (9) comprises a GPS receiver (16).

13. The method according to one of the preceding claims,
**characterized in that**
the control device (9), the sensor (6, 7, 8), the transmitter unit (10), the receiver device (12), the recognition device (13), the camera (14), the transmitter device (15), and the GPS receiver (16) are connected to an own power supply.

14. A system for monitoring the interior of an unlocked goods transport device (1), comprising a control device (9), at least one sensor (6, 7, 8), a transmitter unit (10), an ID transducer (11), a receiver device (12), and a recognition device (13) for carrying out a method according to one of Claims 1 to 13.

15. The system according to Claim 14,
**characterized in that**
the system comprises at least one camera (14) that is located in the interior (2) of the goods transport device (1).

16. The system according to Claim 15,
**characterized in that**
the camera (14) is connected to a transmitter device (15), especially to a transmitter device (15) that comprises a GPRS or a UMTS modem.

17. The system according to one of Claims 14 to 16,
**characterized in that**
the control device (9), the sensor (6, 7, 8), the transmitter unit (10), the receiver device (12), the recognition device (13), the camera (14), the transmitter device (15), and the GPS receiver (16) are connected to an own power supply.

18. The use of a system according to one of Claims 14 to 17 for monitoring the interior (2) of a goods transport device (1).

## Revendications

1. Procédé de surveillance de l'espace intérieur d'un dispositif de transport de marchandises (1), dans lequel une tentative d'accès à l'espace intérieur (2) est reconnue par au moins un capteur (6, 7, 8), suite à quoi un dispositif de commande (9) relié au capteur (6, 7, 8) génère au moins un signal d'alarme et envoie un signal d'invitation à un transmetteur ID externe (11) au moyen d'une unité émettrice (10) afin d'inviter le transmetteur ID (11) à émettre un signal de reconnaissance qui est reçu par l'intermédiaire d'un dispositif de réception (12) et vérifié dans un dispositif de reconnaissance (13), le signal d'alarme étant désactivé après une vérification réussie, **caractérisé en ce que** l'espace intérieur (2) du dispositif de transport de marchandises (1) se trouve à l'état non fermé.

2. Procédé selon la revendication 1, **caractérisé en ce que** la génération du signal d'alarme inclut l'activation d'au moins une caméra (14) qui se trouve dans l'espace intérieur.

3. Procédé selon la revendication 2, **caractérisé en ce que** les données de type image de la caméra (14) sont mises en mémoire.

4. Procédé selon la revendication 2 ou 3, **caractérisé en ce que** les données de type image de la caméra (14) sont transmises par radio via un dispositif d'émission (15) vers un récepteur qui se trouve en dehors de l'espace intérieur (2), et plus particulièrement vers une station de réception d'alarmes.

5. Procédé selon l'une des revendications précédentes, **caractérisé en ce que** la génération du signal d'alarme inclut l'activation d'un signal acoustique et/ou optique.

6. Procédé selon l'une des revendications 2 à 5, **caractérisé en ce que** l'activation de la caméra (14), du signal acoustique et/ou optique et/ou la transmission des données de type image de la caméra (14) par radio via un dispositif d'émission (15) vers un récepteur situé en dehors de l'espace intérieur (2) s'effectuent avec un retard temporel.

7. Procédé selon l'une des revendications précédentes, **caractérisé en ce que** la puissance d'émission de l'unité émettrice (10) est réglée de manière telle que le transmetteur ID externe puisse recevoir le signal d'invitation à une distance de jusqu'à 10 m en dehors de l'espace intérieur (2) du dispositif de transport de marchandises (1).

8. Procédé selon l'une des revendications précédentes, **caractérisé en ce que** la désactivation du signal d'alarme est effectuée par le dispositif de commande (9).

9. Procédé selon l'une des revendications précédentes, **caractérisé en ce que** le dispositif de transport de marchandises (1) est un poids lourd, un wagon ferroviaire de marchandises ou un conteneur.

10. Procédé selon l'une des revendications précédentes, **caractérisé en ce que** sont utilisés, en tant que capteur (6, 7, 8), un ou plusieurs capteurs de mouvement, capteurs de chocs, capteurs de contact de porte et capteurs de température.

11. Procédé selon l'une des revendications précédentes, **caractérisé en ce que** le transmetteur ID (11) est un transpondeur RFID actif.

12. Procédé selon l'une des revendications précédentes, **caractérisé en ce que** le dispositif de commande (9) comprend un récepteur GPS (16).

13. Procédé selon l'une des revendications précédentes, **caractérisé en ce que** le dispositif de commande (9), le capteur (6, 7, 8), l'unité émettrice (10), le dispositif de réception (12), le dispositif de reconnaissance (13), la caméra (14), le dispositif d'émission (15) ou le récepteur GPS (16) sont raccordés à une alimentation en énergie séparée.

14. Système de surveillance de l'espace intérieur (2) d'un dispositif de transport de marchandises (1) non fermé, comprenant un dispositif de commande (9), au moins un capteur (6, 7, 8), une unité émettrice (10), un transmetteur ID (11), un dispositif de réception (12) ainsi qu'un dispositif de reconnaissance (13) pour exécuter un procédé selon l'une des revendications 1 à 13.

15. Système selon la revendication 14, **caractérisé en ce que** le système comprend au moins une caméra (14) qui se trouve dans l'espace intérieur (2) du dispositif de transport de marchandises (1).

16. Système selon la revendication 15, **caractérisé en ce que** la caméra (14) est reliée à un dispositif d'émission (15), et plus particulièrement à un dispositif d'émission (15) qui comprend un modem GPRS ou un modem UMTS.

17. Système selon l'une des revendications 14 à 16, **caractérisé en ce que** le dispositif de commande (9), le capteur (6, 7, 8), l'unité émettrice (10), le dispositif de réception (12), le dispositif de reconnaissance (13), la caméra (14), le dispositif d'émission (15) ou le récepteur GPS (16) sont raccordés à une alimentation en énergie séparée.

18. Utilisation d'un système selon l'une des revendications 14 à 17 pour surveiller l'espace intérieur (2) d'un dispositif de transport de marchandises (1).
